Europäisches Patentamt

European Patent Office

Office européen des brevets

(11) Publication number: **0 498 145 B1**

## EUROPEAN PATENT SPECIFICATION

(45) Date of publication of patent specification: **15.11.95**

(51) Int. Cl.⁶: **A01N 57/20**, //(A01N57/20, 43:16,59:02,25:12,25:30)

(21) Application number: **91870020.4**

(22) Date of filing: **08.02.91**

(54) **Solid glyphosate compositions and their use.**

(43) Date of publication of application:
**12.08.92 Bulletin 92/33**

(45) Publication of the grant of the patent:
**15.11.95 Bulletin 95/46**

(84) Designated Contracting States:
**AT BE CH DE DK ES FR GB GR IT LI LU NL SE**

(56) References cited:
**EP-A- 0 206 537**
**EP-A- 0 220 902**
**EP-A- 0 364 202**
**WO-A-90/07275**

**DERWENT CHEMICAL PATENTS INDEX, BASIC ABSTRACTS JOURNAL, section C: AGDOC, week 8736, 4th November 1987, accession no. 87-253854/36, Derwent Publications Ltd, London, GB.**

(73) Proprietor: **MONSANTO EUROPE S.A.**
**Avenue de Tervuren 270-272**
**Letter Box 1**
**B-1150 Brussels (BE)**

(72) Inventor: **Toussaint, Marc**
**Rue de l'Eglise 15**
**B-5872 Corroy-le-Grand (BE)**
Inventor: **Hanse, Benoit**
**Rue Laurent Delvaux 14**
**B-1400 Nivelles (BE)**

(74) Representative: **Bosch, Henry et al**
**Monsanto Services International S.A.**
**Patent Department**
**Avenue de Tervuren 270/272**
**Letter Box No. 21**
**B-1150 Brussels (BE)**

Rank Xerox (UK) Business Services
(3.10/3.09/3.3.3)

## Description

### Background of the invention

The present invention relates to solid phytoactive glyphosate formulations and their use to kill and control unwanted vegetation.

Glyphosate (N-phosphonomethylglycine) and its salts are well known phytoactive compounds, and the monoisopropylamine salt of glyphosate is present in a well known commercial phytoactive formulation sold under the registered trademark ROUNDUP.

In the present specification and claims, phytoactive means effective as a plant growth regulator, as a herbicide or a defoliant.

### Description of the prior art

Stauffer Chemical Company's European Patent Application No. 0 220 902 discloses a liquid phytoactive composition and methods of use thereof, comprising an N-phosphonomethyl-N-carboxymethyl compound, one or more liquid nonionic surfactants, more particularly alkyl polyglycosides, a dispersing medium or solvent for the N-phosphonomethyl-N-carboxymethyl compound, and one or more inert adjuvants, such as for instance antifoaming agents, thickener, etc. This composition is said to be particularly advantageous and to offer the property of being minimally irritable to the eyes and of being less toxic in view of the use of a surfactant derived from a naturally occurring product.

ICI Australia's European Patent Application 0 364 202 discloses that alkyl glucoside surfactants having an alkyl:glucose ratio of about 1:1.4 can be used in combination with N-phosphonomethylglycine in order to produce a herbicidal composition especially useful for killing grass weeds. The formulations disclosed are aqueous solutions.

### Purpose of the invention

The present invention provides a new solid phytoactive glyphosate composition providing the advantage of saving storage place, lowering transportation costs, containing a high active ingredient content and providing good phytoactivity with that of low toxicity with respect to the environment.

Another aspect of the invention is concerned with the enhancement of glyphosate activity in the presence of an alkyl polyglycoside surfactant and ammonium sulphate.

It is known that ammonium sulphate can enhance the herbicidal activity of glyphosate, but if, as usual, the spray solution contains a surfactant, the effect of ammonium sulphate is markedly dependent on the type of surfactant. For example, Turner and Loader, Weed Research 1980 (20), 139-146, report the results of studies with various surfactants. They found that when used without ammonium sulphate, relatively hydrophilic nonionic or cationic surfactants provided glyphosate formulations having higher unit herbicidal activity. In the presence of ammonium sulphate, however, more hydrophobic (lipophilic) surfactants gave superior results than when using these surfactants alone. With or without ammonium sulphate, cationic surfactants such as ethoxylated fatty amines, provided more effective herbicidal spray solutions than nonionic surfactants such as nonylphenol ethoxylates (see EP-A-0 290 416).

### Essential characteristics of the invention

According to the present invention, the new solid composition as disclosed hereafter shows particular advantages in treating grassy weeds.

The solid composition of the invention comprises:
a) N-phosphonomethylglycine in the form of a salt or the free acid;
b) a surfactant comprising an alkyl glycoside or alkyl polyglycoside; and
c) an agriculturally acceptable inorganic ammonium salt, preferably ammonium sulfate.

It is known that use of alkyl glycosides or alkyl polyglycosides as surfactant provides due enhancement to the phytoactivity of a glyphosate compound. But, in applicant's invention, the combination of an ammonium salt with alkyl polyglycosides enhances the phytoactivity of the glyphosate in a notably, non-expected manner. Moreover, the above formulation as a solid further enhances this invention.

Furthermore, the solid composition of the invention can have a high active ingredient content. Another advantage is that the composition of the invention may be packaged in disposable containers or recyclable containers.

In compositions in which the combined weight of the glyphosate and alkyl polyglycoside provides more than about 80% of the total weight of the composition, the ratio by weight of the glyphosate acid equivalent to alkyl polyglycoside is usually at least 4:1, and is preferably at least 4.5:1, for example from 5:1 to 10:1.

In compositions containing a significant amount, for example at least 50% of the total weight of the composition, of a water-soluble carrier, the ratio by weight of glyphosate acid equivalent to alkyl polyglycoside can be, for example, from 1:1 to 10:1.

In compositions containing in the range from about 20 to about 50% of the total weight of the composition, of a water soluble carrier, the ratio by weight of glyphosate acid equivalent to alkyl polyglycoside can be from about 1/1 to about 5/1.

The alkyl glycosides or alkyl polyglycosides for use in the present invention may be obtained by the reaction of alkanols with glucose or other monosaccharides, or with disaccharides, for example sucrose, or with polysaccharides. Surfactants prepared from mixtures of monosaccharides and disaccharides as well as from mixtures of alkanols can be used. For example certain commercially available alkyl glycosides are products of the reaction of glucose with a mixture of alkanols containing 8 to 10 carbon atoms. The number of alkyl groups per saccharide molecule can vary; for instance mono- or dialkyl glucose or sucrose derivatives are possible.

Preferably, the following surfactants are used in this invention, identified by their trade name: Atplus 450, Triton BG-10, Atplus 258, APG 300 (Henkel), alone or in combination with one another or with other surfactants, preferably surfactants showing good compatibility properties with the alkyl(poly) glycoside used and the glyphosate constituent as well as low toxicity properties according to standard tests. As a preferred class one may employ alkoxylated sorbitan fatty acid esters, quaternary ammonium surfactants, preferably propoxylated ammonium surfactants, or other amine surfactants.

As inerts, one may suitably use defoamers known per se in the art which may be liquid or solid. Alkyl polyglycoside surfactants foam, particularly when used with water in a a spray tank, and therefore generally require a defoamer. In liquid formulations containing glyphosate, the defoamer often easily separates out from the liquid medium, thus creating stability and long storage problems. However, when a defoamer is present in our solid composition according to the invention a liquid composition prepared therefrom does not separate out. Our solid composition does not have stability problems or long term storage problems.

Further, due to the separation of the defoamer from the liquid medium in a case of liquid formulation of the prior art, that liquid composition has to be shaken before use; which requires packaging in small containers. However, dry formulations according to the present invention can be packaged in large quantities at relatively low cost.

The solid composition according to the present invention may still contain up to 10% by weight of water; preferably, however, the water content should not be more than about 8% depending on the amount of other liquid components of the dry solid composition.

The active glyphosate component may be used in its free acid form or in a salt form, such as as the isopropylamine salt or a sodium salt, ammonium salt or a potassium salt. Any salt of glyphosate which in aqueous solution provides glyphosate anions and suitable cations can be used in this invention. Examples of such cations are alkali metal or earth-alkali-metal cations; for instance sodium and potassium, and ammonium and substituted ammonium cations. The latter include cations derived from primary or secondary amines such as isopropylamine or dimethylamine, and from diamines such as ethlenediamine. US Patent 3,799,758 discloses glyphosate salts useful in this invention. Other examples of agriculturally acceptable salts of glyphosate are trimethylsulfonium salt or aminoguanidine salts as disclosed in EP-A-0 088 180. Because glyphosate has more than one replaceable hydrogen atom, mono-and di- alkali metal salts are possible, as well as mixtures of such salts.

The inorganic ammonium salt is an essential feature rendering the compositions suitable for further processing, particularly granulation. The ammonium salt can be ammonium thiocyanate, ammonium phosphate,ammonium carbonate, ammonium nitrate or ammonium chloride but is preferably ammonium sulfate. The content of ammonium salt may range from 20% to 80% of the total weight of the composition.

The composition according to the invention is usually to be diluted in water before being sprayed or applied in another known manner on the plant species to be treated. The dilution may be such that conventional spraying of 100-600 l/ha provides 0.125 to 1.5 kg of glyphosate acid equivalent per hectare. Spray solutions for controlled drop spraying are more concentrated.

The phytoactivity of herbicidal compositions inter alia also depends on the quantity of glyphosate used for treating the particular plant species; thus, the quantity of composition used is always expressed in gram glyphosate acid equivalents per hectare. It has been found that 200-600 grams acid equivalent per hectare have provided the most significant results.

The invention will be described in more detail hereafter, based upon the following Examples.

## Example 1

### Preparation of the formulation according to the invention

Glyphosate acid of technical purity is mixed with alkyl polyglycoside surfactant, ammonium sulfate (and inerts).

According to a first embodiment an acid acceptor (NaOH, $NH_4HCO_3$, KOH, $(NH_4)_2HPO_4$, trisodium citrate) is reacted with glyphosate acid to form the corresponding salt. Depending on the acid acceptor, carbon dioxide and water may be generated from the reaction and water can possibly be evaporated if the reaction is exothermic.

According to another embodiment, glyphosate acid may be used directly.

The desired ingredients are mixed together in order to prepare a pasty mixture convenient for producing water soluble granules by techniques like fluid bed granulation, extrusion, spray-drying, pan granulation, etc. Alternatively the mixture may be compressed into tablets or briquettes of any desired size and shape.

Extrusion, and particularly radial extrusion, is a suitable agglomeration process. It has been found that by radial extrusion, a product with much better dissolution characteristics in water can be obtained, compared with a product prepared by frontal extrusion.

After final drying following extrusion, the granules may be sieved to avoid the presence of lumps or dust.

A composition of the invention was:

| | |
|---|---|
| - glyphosate sodium salt (100%) | 22.29% w/w |
| - Atplus 258 surfactant (100%) | 9.86 |
| - $(NH_4)_2SO_4$ (100%) | 59.19 |
| - impurities | 0.67 |
| - NaOH excess | 0.23 |
| - DC 24 10 | 0.06 |
| - water | 7.69 |
| % w/w = percent weight per weight. | |

In the following examples, the immediately above composition bears the reference numeral 2.

Another composition according to the invention is exemplified hereafter:

| | |
|---|---|
| - glyphosate sodium salt | 30.34% w/w |
| - Atplus 450 surfactant | 5.37% |
| - ammonium sulfate | 59.85% |
| - impurities | 1.79% |
| - MSA defoamer | 1.16% |
| - water | 1.50 |

## Example 2

### Greenhouse evaluation on geranium molle at different formulations according to the invention.

The dry formulations of this invention were dissolved in water and sprayed by a Mardrive sprayer on the test plant species at a temperature of 12°/18°C and relative humidity of 65%/75% day/night.

EP 0 498 145 B1

| Formulation No. | Surfactant used | Ratio Gly a.e./surf./AS |
|---|---|---|
| 0 (control)* | ethoxylated fatty amine | 2 / 1 / 0 |
| 1 (invention) | Atplus 258 | 2 / 1 / 8 |
| 2 (invention) | Atplus 258 | 2 / 1 / 6 |
| 3 (control) | Atplus 258 | 2 / 1 / 0 |

The results obtained are shown in Table 1.

* = aqueous formulation of isopropylamine salt of glyphosate with ethoxylated fatty amine surfactant.

Formulation 1 also contains a glyphosate sodium salt and the Atplus 258 surfactant, such as formulation 2, but in a different ratio.

Control (3) is a liquid formulation of glyphosate isopropylamine salt and Atplus 258 surfactant without ammonium sulfate.

5

## TABLE 1

### Percent phytotoxicity obtained on geranium

| Formulation No. | glyphosate g.a.e./Ha* | % phytotoxicity at day 16 | 30 |
|---|---|---|---|
| 0 | 200 | 22 | 50 |
|   | 400 | 42 | 75 |
|   | 600 | 40 | 80 |
|   | 800 | 50 | 84 |
| 1 | 200 | 33 | 58 |
|   | 400 | 52 | 80 |
|   | 600 | 65 | 90 |
|   | 800 | 63 | 95 |
| 2 | 200 | 27 | 50 |
|   | 400 | 42 | 78 |
|   | 600 | 55 | 86 |
|   | 800 | 55 | 92 |
| 3 | 200 | 17 | 45 |
|   | 400 | 33 | 68 |
|   | 600 | 58 | 84 |
|   | 800 | 58 | 90 |

*g.a.e./Ha = grams acid equivalent per hectare.
at day 16 = 16 days after treatment.

Example 3

Greenhouse evaluation on rape

The same formulations as those used in Example 2 have been sprayed on rape by a Mardrive sprayer, at a temperature of 12/18°C and relative humidity of 65%/75% day/night.

6

The results obtained are shown in Table 2.

## TABLE 2

## Percent phytotoxicity obtained on rape

| Formulation No. | glyphosate g.a.e./Ha | % phytotoxicity at day 16 | 30 |
|---|---|---|---|
| 0 | 200 | 22 | 30 |
|   | 400 | 33 | 43 |
|   | 600 | 47 | 59 |
|   | 800 | 63 | 58 |
| 1 | 200 | 50 | 52 |
|   | 400 | 50 | 50 |
|   | 600 | 68 | 63 |
|   | 800 | 63 | 69 |
| 2 | 200 | 46 | 45 |
|   | 400 | 54 | 59 |
|   | 600 | 60 | 77 |
|   | 800 | 53 | 75 |
| 3 | 200 | 38 | 30 |
|   | 400 | 43 | 33 |
|   | 600 | 58 | 70 |
|   | 800 | 60 | 69 |

Example 4

Greenhouse evaluation on couch (Elymus repens)

The same formulations as those used in Examples 2 and 3 were sprayed on the above test plant species. After 21 days after treatment (DAT), the plants were cut at pot level, and regrowth was measured after 2 weeks. Test conditions: temperature of 12/18°C and relative humidity of 65%/75% day/night.

EP 0 498 145 B1

The results obtained are shown in Table 3.

TABLE 3

Percent phytotoxicity and percent regrowth obtained on rape

| Formulation No. | glyphosate g.a.e./Ha | % phytotoxicity | | % regrowth | |
|---|---|---|---|---|---|
| | | 14 | 21 | 35 | DAT |
| 0 | 200 | 17 | 10 | 55 | |
| | 400 | 35 | 50 | 18 | |
| | 600 | 35 | 52 | 15 | |
| | 800 | 42 | 60 | 11 | |
| 1 | 200 | 35 | 58 | 4 | |
| | 400 | 50 | 75 | 4 | |
| | 600 | 50 | 79 | 3 | |
| | 800 | 55 | 85 | 1 | |
| 2 | 200 | 28 | 52 | 9 | |
| | 400 | 51 | 67 | 4 | |
| | 600 | 50 | 78 | 2 | |
| | 800 | 60 | 85 | 1 | |
| 3 | 200 | 25 | 38 | 14 | |
| | 400 | 38 | 57 | 12 | |
| | 600 | 40 | 63 | 5 | |
| | 800 | 45 | 67 | 2 | |

Example 5

Plants were grown from seed in 10 cm pots containing a natural sandy loam soil. The pots were placed in a growth-room until the spraying with a precise relative humidity as well as temperature control. After spraying plants were transferred into a greenhouse where light and temperature were also well controlled. Plants remained in this greenhouse for the remainder of the experiment. Both in the growth-room and in the greenhouse, the water was supplied from below the pots by an automatic irrigation system.

Plants reached the appropriate growth stage for spraying around 3-4 weeks after sowing. Before spraying, pots were selected for uniformity as far as possible and atypical pots were discarded.

A composition according to the present invention comprising isopropylamine salt of glyphosate, an alkyl polyglycoside and ammonium sulphate in the weight ratio 2:1:6 was diluted with water and sprayed with a Mardrive sprayer at a spray volume of 200 l/ha on oilseed rape (BRSNW), couch (AGRRE), lolium (LOLRI) and geranium (GERMO). All replicate pots (3 pots per treatment) were sprayed with one pass of the sprayer.

Pots were distributed randomly in the greenhouse after treatment. Untreated control pots were placed at random among treated pots.

8

Assessment of per cent phytotoxicity was made by comparison with untreated control pots on an arbitrary scale from 0 to 100%, where 0 means no visible effect and 100 means death of all plants.

Tank mixed formulations according to the present invention are compared with liquid compositions containing no inorganic ammonium salt.

The results were assessed at 14 days, 22 days and 35 days after treatment.

In the following table "GLYPHOSATE IPA" means a liquid composition containing the isopropylamine salt of glyphosate.

### TABLE 4

| Compo-<br>sition | Application<br>rate<br>g.a.e./ha | BRSNW<br>DAT<br>14 22 35 | AGRRE<br>DAT<br>14 22 35 | LOLRI<br>DAT<br>14 22 35 | GERMO<br>DAT<br>14 22 35 |
|---|---|---|---|---|---|
| GLYPHOSATE IPA<br>ATPLUS 450 | 200 | 10  7 17 | 52 57 53 | 33 28 20 | 27 27 28 |
| GLYPHOSATE IPA<br>ATPLUS 450 | 400 | 30 22 40 | 62 63 78 | 55 82 75 | 52 65 57 |
| GLYPHOSATE IPA<br>ATPLUS 450 | 600 | 67 75 75 | 58 73 70 | 52 75 72 | 62 68 55 |
| GLYPHOSATE IPA<br>ATPLUS 450<br>AMS (2:1:6) | 200 | 12 13 15 | 40 43 40 | 40 27 20 | 28 25 43 |
| GLYPHOSATE IPA<br>ATPLUS 450<br>AMS (2:1:6) | 400 | 65 67 67 | 57 65 65 | 68 97 98 | 67 82 78 |
| GLYPHOSATE IPA<br>ATPLUS 450<br>AMS (2:1:6) | 600 | 60 62 63 | 62 72 73 | 67 92 95 | 80 83 78 |
| GLYPHOSATE IPA<br>ATPLUS 258 | 200 | 30 48 22 | 47 25 40 | 38 32 40 | 23 33 18 |
| GLYPHOSATE IPA<br>ATPLUS 258 | 400 | 48 62 60 | 53 63 65 | 65 83 82 | 47 68 47 |

| Composition | Application rate g.a.e./ha | BRSNW DAT 14 22 35 | AGRRE DAT 14 22 35 | LOLRI DAT 14 22 35 | GERMO DAT 14 22 35 |
|---|---|---|---|---|---|
| GLYPHOSATE IPA ATPLUS 258 | 600 | 73 77 78 | 70 80 87 | 72 93 97 | 60 77 70 |
| GLYPHOSATE IPA ATPLUS 258 AMS (2:1:6) | 200 | 23 28 25 | 53 53 45 | 42 53 28 | 35 57 37 |
| GLYPHOSATE IPA ATPLUS 258 AMS (2:1:6) | 400 | 60 62 57 | 57 63 68 | 70 92 83 | 60 78 68 |
| GLYPHOSATE IPA ATPLUS 258 AMS (2:1:6) | 600 | 75 77 73 | 73 85 75 | 77 95 95 | 82 92 83 |

From Table 4 even on weeds difficult to control by glyphosate, like oilseed rape and couch, the compositions according to the present invention show effective activity at the rates applied.

On more easily controlled weeds, like Lolium or Geranium, at the highest application rate, the activity is boosted by the presence of ammonium sulfate.

Example 6

A further composition of the invention is exemplified hereafter:

| | |
|---|---|
| - glyphosate sodium salt | 42.43% w/w |
| - APG 300 (Henkel)[*] | 4.50% |
| - Dodigen 4022 (Hoechst) (propoxylated quaternary ammonium) | 10.50% |
| - ammonium sulfate | 40.09% |
| - impurities | 0.96% |
| - MSA defoamer | 0.33% |
| - water | 0.25% |

[*]alkyl polyglucoside

This composition has been diluted with water and sprayed at 200 l/ha in a single pass using standard field spraying equipment.

The rates of application were equivalent to 360, 720 and 1440 g glyphosate acid equivalent per hectare.

Weeds assessed:  Geranium molle (GERMO)
Matricaria chamomilla (MATCH)
Poa annua (POANN).

The treatment was carried out in November. The temperature at spraying was about 14°C. Heavy night frost (about -10°C) was recorded during the week following the spraying. No rain was recorded during that time.

Assessment of per cent phytotoxicity was made by comparison with untreated control plots on an arbitrary scale of 0 to 100%, where 0 means no visible effect and 100 means death of all plants.

TABLE 5

| Composition | rate g a.e/ha | GERMO 26 DAT | MATCH 26 DAT | POANN 26 DAT |
|---|---|---|---|---|
| *Control | 360 | 12 | 32 | 37 |
| | 720 | 30 | 40 | 50 |
| | 1440 | 40 | 43 | 62 |
| Composition of this Example | 360 | 22 | 32 | 43 |
| | 720 | 27 | 42 | 53 |
| | 1440 | 33 | 42 | 55 |

*Control = isopropylamine salt of glyphosate + ethoxylated fatty amine surfactant (Roundup® herbicide).

The example shows that under the conditions of this test, the efficacy of the composition of this example was comparable to a current commercial glyphosate composition containing an ethoxylated fatty amine surfactant.

From the above Examples 1-5 the formulations according to the invention are comparable to and in some tests more active than a commercial composition which as sold does not contain any ammonium sulfate but which comprises a different surfactant, an ethoxylated fatty amine.

Due to the physico-chemical properties of the constituents used in the above compositions, ammonium sulfate is an essential constituent for obtaining the desired dry formulations in an acceptable manner allowing further processing by extrusion, spray bed drying, pan granulation, fluid bed agglomeration, etc.

## Claims

1. A solid phytoactive composition comprising:
   a) N-phosphonomethylglycine in the form of a salt or the acid;
   b) an alkyl glycoside or alkyl polyglycoside; and
   c) an agriculturalLY acceptable inorganic ammonium salt, preferably ammonium sulfate.

2. A composition according to Claim 1 characterized in that the ratio by weight of glyphosate acid equivalent to alkyl polyglycoside is between 1:1 and 10:1.

3. A composition according to Claim 1 or Claim 2 characterized in that the alkyl glycoside or alkyl-polyglycoside is used alone or in combination with one or more other surfactants.

4. A composition according to Claim 3 characterized in that the other surfactant is a sorbitan ester, quaternary ammonium, or amine surfactant.

5. A composition according to Claim 3, wherein said salt of N-phosphonomethylglycine is the isopropylamine salt or the trimethylsulfonium salt.

6. A composition of Claim 5, wherein said salt is the isopropylamine salt.

7. A composition according to any of the preceding claims characterized in that the content of inorganic ammonium salt is between 20% and 80% of the total weight of the composition.

8. Method for controlling unwanted vegetation which comprises applying to a plant to be treated, a phytotoxic amount of a composition according to any of Claims 1-7, diluted in water in order to apply between 0.125 and 1.5 kg glyphosate acid equivalent per hectare.

9. A process for preparing the composition of any one of Claims 1-7 by reacting an acid acceptor with glyphosate or using glyphosate directly and mixing said alkyl glucoside or alkyl polyglucoside and ammonium sulfate therewith in order to prepare a pasty mixture and thereafter granulating, extruding or spray drying to prepare said composition.

**Patentansprüche**

1.  Feste phytoaktive Zusammensetzung, welche umfaßt:
    a) N-Phosphonomethylglycin in Form eines Salzes oder der Säure;
    b) ein Alkylglykosid oder Alkylpolyglykosid; und
    c) ein landwirtschaftlich annehmbares anorganisches Ammoniumsalz, vorzugsweise Ammoniumsulfat.

2.  Zusammensetzung nach Anspruch 1, dadurch gekennzeichnet, daß das Masseverhältnis von Glyphosatsäure-Äquivalent zu Alkylpolyglykosid zwischen 1:1 und 10:1 beträgt.

3.  Zusammensetzung nach Anspruch 1 oder 2, dadurch gekennzeichnet, daß das Alkylglykosid oder Alkylpolyglykosid allein oder in Kombination mit einem oder mehreren anderen Surfactants verwendet wird.

4.  Zusammensetzung nach Anspruch 3, dadurch gekennzeichnet, daß das andere Surfactant ein Sorbitanester-, quaternäres Ammonium- oder Amin-Surfactant ist.

5.  Zusammensetzung nach Anspruch 3, worin das genannte Salz von N-Phosphonomethylglycin das Trimethylsulfoniumsalz ist.

6.  Zusammensetzung nach Anspruch 5, worin das genannte Salz das Isopropylaminsalz ist.

7.  Zusammensetzung nach einem der vorhergehenden Ansprüche, dadurch gekennzeichnet, daß der Gehalt an anorganischem Ammoniumsalz zwischen 20 % und 80 % der Gesamtmasse der Zusammensetzung beträgt.

8.  Verfahren zur Bekämpfung unerwünschter Vegetation, welches umfaßt: Aufbringen, auf eine zu behandelnde Pflanze, einer phytotoxischen Menge einer Zusammensetzung nach einem der Ansprüche 1 bis 7, verdünnt in Wasser, wobei zwischen 0,125 und 1,5 kg Glyphosatsäure-Äquivalent pro Hektar aufgebracht werden.

9.  Verfahren zur Herstellung einer Zusammensetzung nach einem der Ansprüche 1 bis 7 durch das Umsetzen eines Säure-Akzeptors mit Glyphosat oder durch direkte Verwendung von Glyphosat und Mischen des genannten Alkylglucosids oder Alkylpolyglucosids und von Ammoniumsulfat damit, wobei eine pastenförmige Mischung hergestellt wird, und danach Granulieren, Extrudieren oder Sprühtrocknen, wobei die genannte Zusammensetzung hergestellt wird.

**Revendications**

1.  Composition phyto-active solide, comprenant :
    a) de la N-phosphonométhylglycine, sous forme d'acide ou sous forme d'un sel,
    b) un alkyl-glycoside ou un alkyl-polyglycoside, et
    c) un sel minéral d'ammonium, acceptable en agriculture, qui est de préférence du sulfate d'ammonium.

2.  Composition conforme à la revendication 1, **caractérisée** en ce que le rapport pondéral de l'équivalent acide de glyphosate à l'alkyl-polyglycoside vaut entre 1/1 et 10/1.

3.  Composition conforme à la revendication 1 ou 2, **caractérisée** en ce que l'alkyl-glycoside ou l'alkyl-polyglycoside est utilisé seul ou en combinaison avec un ou plusieurs autres tensio-actifs.

4.  Composition conforme à la revendication 3, **caractérisée** en ce que l'autre tensio-actif est un tensio-actif de type ester de sorbitane, ammonium quaternaire ou amine.

**5.** Composition conforme à la revendication 3, dans lequel ledit sel de N-phosphonométhylglycine est du sel de triméthylsulfonium.

**6.** Composition conforme à la revendication 3, dans lequel ledit sel est le sel d'isopropylamine.

**7.** Composition conforme à l'une des revendications précédentes, **caractérisée** en ce que sa teneur en sel minéral d'ammonium représente entre 20 % et 80 % du poids total de la composition.

**8.** Procédé de lutte contre la végétation indésirable, qui consiste à épandre, sur les plants à traiter, une quantité phytotoxique d'une composition conforme à l'une quelconque des revendications 1 à 7, que l'on a diluée dans de l'eau de façon à épandre entre 0,125 et 1,5 kg d'équivalent acide de glyphosate par hectare.

**9.** Procédé de préparation d'une composition conforme à l'une quelconque des revendications 1 à 7, dans lequel on fait réagir un accepteur d'acide avec du glyphosate ou bien on utilise directement du glyphosate, et on y mélange ledit alkyl-glycoside ou alkyl-polyglycoside et du sulfate d'ammonium afin de préparer un mélange pâteux, que l'on soumet ensuite à une granulation, à une extrusion ou à un séchage par pulvérisation afin de préparer ladite composition.